(19)

Europäisches
Patentamt

European
Patent Office

Office européen
des brevets

(11)  **EP 3 328 083 A1**

(12)  **EUROPEAN PATENT APPLICATION**

(43) Date of publication:
　　 **30.05.2018　Bulletin 2018/22**

(51) Int Cl.:
　　 **H04N 19/176** (2014.01)　　　 **H04N 19/124** (2014.01)
　　 **H04N 19/154** (2014.01)　　　 **H04N 19/192** (2014.01)

(21) Application number: **16306542.8**

(22) Date of filing: **23.11.2016**

(84) Designated Contracting States:
　　 **AL AT BE BG CH CY CZ DE DK EE ES FI FR GB
　　 GR HR HU IE IS IT LI LT LU LV MC MK MT NL NO
　　 PL PT RO RS SE SI SK SM TR**
　　 Designated Extension States:
　　 **BA ME**
　　 Designated Validation States:
　　 **MA MD**

(71) Applicant: **Thomson Licensing
　　 92130 Issy-les-Moulineaux (FR)**

(72) Inventors:
　　 • **GALPIN, Franck
　　　 35576 Cesson-Sévigné Cedex (FR)**

　　 • **LELEANNEC, Fabrice
　　　 35576 Cesson-Sévigné Cedex (FR)**
　　 • **RACAPE, Fabien
　　　 35576 Cesson-Sévigné Cedex (FR)**
　　 • **POIRIER, Tangi
　　　 35576 Cesson-Sévigné Cedex (FR)**
　　 • **VIELLARD, Thierry
　　　 35576 Cesson-Sévigné Cedex (FR)**
　　 • **URBAN, Fabrice
　　　 35576 Cesson-Sévigné Cedex (FR)**

(74) Representative: **Huchet, Anne
　　 TECHNICOLOR
　　 1-5, rue Jeanne d'Arc
　　 92130 Issy-les-Moulineaux (FR)**

(54)　**METHOD AND APPARATUS FOR ENCODING A VIDEO APPLYING ADAPTIVE QUANTISATION**

(57)　　A method and an apparatus for encoding a video are disclosed. A first curve giving quantization parameters in function of distortion values is associated (12) to each block of a picture from said video. A target overall distortion for said picture is computed (131) according to a same initial quantization parameter assigned to each block of the picture and using for each block said associated first curve, and a quantization parameter map for said picture is determined (132) by assigning for each block, a quantization parameter given by said first curve associated with said block for said target overall distortion. The picture is then encoded (16) using the quantization parameter map.

EP 3 328 083 A1

FIG. 1

## Description

### 1. Technical field

A method and an apparatus for encoding a video into a bitstream are disclosed.

### 2. Background art

Digital images and video sequence need a lot of resources for storage and transmission and thus image and video compression techniques are needed for reducing bandwidth and storage space.

Video coding schemes are already known, such as HEVC ("High Efficiency Video Coding) or VP9. In such schemes, a video sequence is coded picture by picture. Each picture is decomposed into a set of blocks. In order to reduce the number of bits used for coding each block, such schemes perform lossy coding using a quantization tool that compresses a range of values to a single quantum value.

In video compression schemes, such as VP8 or VP9 for instance, rate/distortion optimization is performed on the encoder side for determining the best compromise between rate and distortion when coding each block of a picture. Such rate/distortion optimization may adapt a quantization parameter at a block level to precisely control the rate and the distortion of a block to encode. Classically, the distortion is measured at the block level using an objective measure such as PSNR (Peak Signal to Noise Ratio) or MSE (Mean Square Error). However, such measures do not take into account the properties of the Human Visual System, and result in compressed video wherein picture quality is not homogeneous.

### 3. Summary

A method for encoding a video is disclosed. Such an encoding method comprises:

- associating to each block of a picture from said video, a first curve giving quantization parameters in function of distortion values,
- computing a target overall distortion for said picture according to a same initial quantization parameter assigned to each block of the picture and using for each block said associated first curve,
- determining a quantization parameter map for said picture comprising:

  - assigning for each block, a quantization parameter given by said first curve associated with said block for said target overall distortion,
  - encoding said picture using said quantization parameter map.

The present principle allows determining a quantization parameter for each block to encode based on a target overall distortion for the picture. Therefore, the picture quality of the resulting compressed video is more homogeneous.

According to an embodiment of the disclosure, the encoding method further comprises adapting the quantization parameter map according to a coding constraint for coding said quantization parameter map. According to this embodiment, compression efficiency is improved since the resulting quantization parameter map (QP map) is adapted according to coding constraint. For instance, a coding constraint may be a limited number of quantization parameters to be used for the blocks of the picture. For instance, a VPx encoder allows only 8 different quantization parameters for the quantization parameter map. According to a variant, a coding constraint for coding the quantization parameter map may be a coding cost or bitrate allowed for encoding the QP assigned to each block.

According to another embodiment of the disclosure, the encoding method further comprises:

- computing an overall distortion for said picture according to said adapted quantization parameter map and the first curve associated with each block of the picture,
- comparing said overall distortion and said target overall distortion:

  - if said overall distortion is higher than a first threshold depending on said target overall distortion, reducing said target overall distortion of a first change factor,
  - if said overall distortion is lower than a second threshold depending on said target overall distortion, increasing said target overall distortion of a second change factor,

- iterating said acts of determining a quantization parameter map for said picture, adapting the quantization parameter map according to a coding constraint, computing an overall distortion for said picture and comparing said overall distortion and said target overall distortion, until said overall distortion is between said first threshold and said second threshold or until a number of iterations has been reached.

This embodiment allows providing a compromise between the encoding rate of the selected quantization parameters and the quality of the resulting encoded picture. This embodiment allows controlling the determination of the quantization parameter map based on the perceived quality of the picture.

According to another embodiment of the disclosure, the encoding method further comprises:

- computing a central quantization parameter from the quantization parameter map,
- comparing said central quantization parameter and said initial quantization parameter:
- if said central quantization parameter is lower than a first threshold depending on said initial quantization parameter, reducing said target overall distortion of a first change factor,
- if said central quantization parameter is higher than a second threshold depending on said initial quantization parameter, increasing said target overall distortion of a second change factor,
- iterating said acts of determining a quantization parameter map for said picture, adapting the quantization parameter map according to a coding constraint, computing a central quantization parameter and comparing said central quantization parameter and said initial quantization parameter, until said central quantization parameter equals said initial quantization parameter or until a number of iterations has been reached.

This embodiment allows controlling the determination of the quantization parameter map based on the initial quantization parameter assigned to the picture to encode. For instance, such an initial quantization parameter may be a quantization parameter assigned by a rate control mechanism of an encoder.

According to another embodiment of the disclosure, each block of the picture is associated with a second curve representing quantization parameters in function of rate values. The encoding method further comprises:

- computing an overall rate for said picture according to said adapted quantization parameter map and the second curve associated with each block of the picture,
- comparing said overall rate and a target rate for said picture:

- if said overall rate is lower than a first threshold depending on said target rate, reducing said target overall distortion of a first change factor,
- if said overall rate is higher than a second threshold depending on said target rate, increasing said target overall distortion of a second change factor,

- iterating said acts of determining a quantization parameter map for said picture, adapting the quantization parameter map according to a coding constraint, computing an overall rate for said picture and comparing said overall rate and said target rate, until said overall distortion is between said first threshold and said second threshold or until a number of iterations has been reached.

This embodiment allows controlling the determination of the quantization parameter map based on a target rate for the picture to encode. For instance, such a target rate may correspond to a rate of the picture computed using an initial quantization parameter assigned to the picture by an encoder or a rate directly assigned by the encoder.

According to another embodiment of the disclosure, adapting the quantization parameter map uses a K-mean clustering method for reducing the number of quantization parameters of the map.

According to another embodiment of the disclosure, said K-mean clustering comprises quantization parameter classes computing wherein for a quantization parameter assigned to a block, said quantization parameter, said quantization parameter is associated with each quantization parameter class which comprises a centroid on said plateau.

According to another embodiment of the disclosure, said K-mean clustering comprises quantization parameter classes centroids computing wherein for a quantization parameter assigned to a block, said quantization parameter belonging to a plateau part of a first curve associated with said block, a value taken into account for computing a class centroid corresponds to a maximum value selected from a first quantization parameter of the plateau part of the first curve to which the quantization parameter belongs or a mean value of quantization parameters of the class which do not belong to the plateau part.

According to this embodiment, the quantization parameters of a class which belong to a plateau part of the QP-distortion curve will participate to the centroid of the class computation such as it moves the less possible the average of the class.

According to another embodiment of the disclosure, said K-mean clustering comprises error computing of a class wherein for a quantization parameter assigned to a block, said quantization parameter belonging to a plateau part of a first curve associated with said block, error is computing by taking into account a maximum value selected from a difference computed as a first quantization parameter of the plateau part of the first curve to which the quantization parameter belongs minus a value of the centroid of the class or a zero value. According to another embodiment of the disclosure, the number of different quantization parameters of the map depends on a target bitrate for the picture. This embodiment allows adapting the overhead cost for encoding the QP map to the rate allocated to the picture. At low bitrate, the overhead cost for encoding the QP map is to high compared to the gain in perceptual metric.

According to another embodiment of the disclosure, the encoding method further comprises, for at least one block of said picture, refining said quantization parameter assigned to said at least one block according to a spatial neighbor block of said at least one block or according to a block co-located with said at least one block in a last encoded frame. This embodiment allows reducing the coding cost of the quantization parameters map by taking into account spatial or temporal neighbor of a block used for entropy coding of the QP map.

According to another embodiment of the disclosure, said quantization parameter map comprises a number N of different values of quantization parameter, and said quantization parameter map comprises a header assigning an index to each different value of quantization parameter and a map of index wherein an index is assigned to each block of said picture. The encoding method further comprises encoding said quantization parameter map comprising:

- encoding data representative of said header,
- encoding data representative of said map of index.

According to another embodiment of the disclosure, for a picture coded in an inter-frame mode, subsequent to said picture, a header of said subsequent picture is a same header as the header of said picture. According to this embodiment, the set of quantization parameters used for encoding the picture is kept consistent between pictures that are inter-frame coded.

According to another embodiment of the disclosure, for a picture coded at a predetermined temporal layer, said N different values of quantization parameter are set to a same quantization parameter value in the header. According to this embodiment, it is possible to disable the use of the QP map for pictures coded in deep temporal layer by setting a same QP to all index in the data map. For such pictures, the cost of a QP map may be too high. According to this embodiment, even if the QP map is disabled for a deep temporal layer picture, the data map is still propagated to future pictures so that the data map is available for entropy coding for future pictures. Therefore, no distortion is introduced when the data map is not updated for a picture.

According to another embodiment of the disclosure, for a first picture co-located to a reference picture coded only for use as a reference picture, said first picture being inter-coded from said reference picture, at least one second picture being coded between said reference picture and said first picture, a skip flag set to a value 1 is assigned to each index of a header of a quantization parameter map of said first picture instead of a quantization parameter value.

For instance, a reference picture coded only for use as a reference picture corresponds to an alt-ref picture of a VPx compression standard, and a first picture co-located to such a reference picture and inter-coded from such a reference picture corresponds to a golden picture of a VPx compression standard. When pictures are coded in the bitstream between an alt-ref picture and a golden picture, the QP map used for coding of the alt-ref picture may have changed when coding the golden picture because of rate-distortion choices made for pictures in-between. This embodiment allows preserving the quality of the golden picture by encoding the golden picture as a full skip of blocks resulting in an exact copy of the alt-ref picture to the golden picture.

According to another aspect of the disclosure, an apparatus for encoding a video is also disclosed. Such an apparatus comprises:

- means for associating to each block of a picture from said video, a first curve giving quantization parameters in function of distortion values,
- means for computing a target overall distortion for said picture according to a same initial quantization parameter assigned to each block of the picture and using for each block said associated first curve,
- means for determining a quantization parameter map for said picture comprising:

    - means for assigning for each block, a quantization parameter given by said first curve associated with said block for said target overall distortion,
    - means for encoding said picture using said quantization parameter map.

According to one implementation, the different steps of the method for encoding a video as described here above are implemented by one or more software programs or software module programs comprising software instructions intended for execution by a data processor of an apparatus for encoding a video, these software instructions being designed to command the execution of the different steps of the method according to the present principles.

A computer program is also disclosed that is capable of being executed by a computer or by a data processor, this program comprising instructions to command the execution of the steps of a method for encoding a video as mentioned here above.

This program can use any programming language whatsoever and be in the form of source code, object code or intermediate code between source code and object code, such as in a partially compiled form or any other desirable form whatsoever.

The information carrier can be any entity or apparatus whatsoever capable of storing the program. For example, the carrier can comprise a storage means such as a ROM, for example a CD ROM or a microelectronic circuit ROM or again a magnetic recording means, for example a floppy disk or a hard disk drive.

Again, the information carrier can be a transmissible carrier such as an electrical or optical signal, which can be conveyed via an electrical or optical cable, by radio or by other means. The program according to the present principles can be especially uploaded to an Internet type network.

As an alternative, the information carrier can be an integrated circuit into which the program is incorporated, the circuit being adapted to executing or to being used in the execution of the methods in question.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc) and is capable of accessing hardware resources of this physical entity (memories, recording media, communications buses, input/output electronic boards, user interfaces, etc).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

4. Brief description of the drawings

Figure 1 illustrates a flow diagram of an exemplary method for encoding a picture according to an embodiment of the present principle,
Figure 2A illustrates a flow diagram of an exemplary method for generating learning data that may be used in the exemplary method for encoding a picture according to an embodiment of the present disclosure,
Figure 2B illustrates a flow diagram of an exemplary method for generating trajectory curves that may be used in the exemplary method for encoding a picture according to an embodiment of the present disclosure,
Figure 3 illustrates a simplified example of a trajectory curve according to an embodiment of the present disclosure,
Figure 4A illustrates a flow diagram of an exemplary method for generating a quantization parameter map according to an embodiment of present disclosure,
Figure 4B illustrates a flow diagram of an exemplary method for generating a quantization parameter map according to another embodiment of present disclosure,
Figure 4C illustrates a flow diagram of an exemplary method for generating a quantization parameter map according to another embodiment of present disclosure,
Figure 5 illustrates a flow diagram of an exemplary method for adapting a quantization parameter map,
Figure 6 illustrates a simplified example of an admissible range of QP for a given block trajectory,
Figure 7 illustrates causal neighbors of a block,
Figure 8 illustrates an example of picture encoding order and reference picture used,
Figure 9 illustrates a block diagram of an exemplary encoder according to an embodiment of the present disclosure,
Figure 10 illustrates an exemplary structure of an encoder that may be used in any one of the embodiments disclosed herein, according to an embodiment of the present disclosure.

5. Description of embodiments

Classical rate-distortion optimization (RDO) tools aim at allocating a bit budget at a block level when encoding a picture while optimizing the objective quality of the reconstructed block. Such RDO tools are based on objective metrics such as MSE/PSNR. Therefore, the overall objective quality of a picture to encode is optimized with regards to these metrics. However, PSNR does not take into account the properties of the Human Visual System. More coherent bitrate allocation may be performed knowing the sensitivity of human eyes. A higher perceptual/visual quality of the overall content may be achieved by better distributing the compression methods and parameters over the pictures of source video sequences.

The human visual system (HVS) is more sensitive to contrast than absolute luminance. Moreover, the sensitivity depends on the spatial frequency of the picture or region of the picture. This sensitivity decreases on high spatial frequencies, i.e. in detailed textures. This phenomenon is also known as contrast sensitivity.

High frequencies often require a huge amount of bits to be transmitted at a high quality level since they are more difficult to predict. By better distributing the coding parameters when encoding a picture, these highly detailed regions or blocks will be encoded at a lower level of quality, for instance by using a more severe quantization. The subjective quality of the reconstructed picture would not be impacted as the HVS is not able to detect the produced artefacts. The preserved bitrate could then be utilized to enhance the quality of low frequency regions for improving the overall perceived quality.

When solving the problem of perceptual coding, some methods rely on the fact that a particular local "perceptual metric" is available during the encoding stage, allowing the encoder to decide encoding mode (especially the QP of the local block) based on these metrics. Such methods generally rely on a local activity measure to decide the coding mode. A problem with these approaches is that the perceptual quality of a block is very difficult to measure locally (i.e. taking into account only the pixels inside the bloc), and the best perceptual metrics (for example VQM, WQA for Wavelet-based Quality Assessment, etc.) use a global approach to obtain the metric of each pixel.

In practice, it means that during the encoding stage, one cannot compute these perceptual metrics on-the-fly based on the result of the encoding of the current block (typically during the RDO). An alternative is to perform a so-called "first pass" in order to choose some suitable quantization parameters (QPs) prior to the encoding stage.

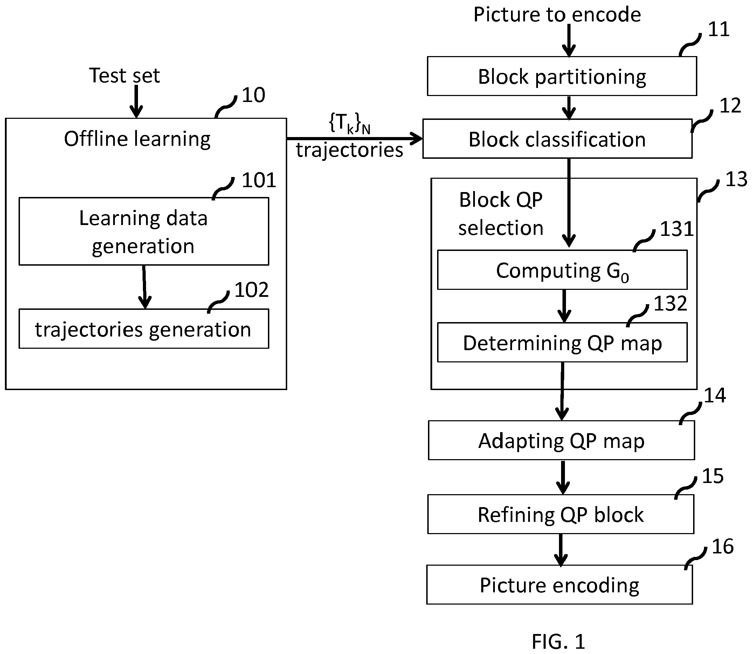

Figure 1 illustrates a flow diagram of an exemplary method for encoding a picture according to an embodiment of the present disclosure.

In step 10, an offline learning method is performed to compute a set of trajectories curves or D-Q curves. A trajectory curve allows representing for a given block of a picture the change in quality function of the quantization parameters. Such offline learning method is performed for a test set of video sequences. The offline learning method delivers a set of N trajectories classes $\{T_k\}_N = \{M_k(QP)\}_N$, where $M_k(QP)$ is a representative function of the classe k giving the distortion of a block in function of the QP.

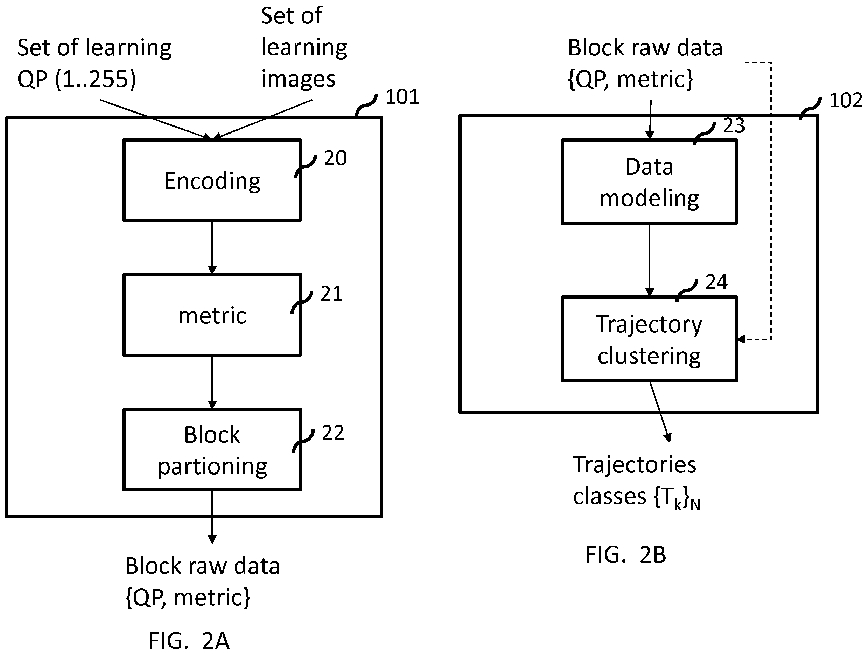

The offline learning method comprises generating learning data (step 101) and generating QP(D) trajectories (step 102). Steps 101 and 102 are further described below in relation respectively with figures 2A and 2B.

In step 11, a picture to encode is partitioned into a set of blocks. Typically, 8x8 pixels or 16x16 pixels may be used, but any other region shape for which the QP can be set constant may be used.

In step 12, each block is classified with the set of trajectories classes $\{T_k\}_N$ computed in step 10. Such a classification allows associating to each block of the picture a given class k of trajectory from the set $\{T_k\}_N$. Such a classification may be performed by performing the steps of the offline learning process to a current block for determining its trajectory curve $M_b(QP)$ and associating the class k to the current block which comprises the trajectory curve $M_b(QP)$ of the block.

According to another variant, each class of trajectories is associated with specific features of blocks, such as textures type, ranges of frequencies, etc. Classification of a current block is then performed by computing the block's features and associating the block to the trajectory class associated with similar features.

In step 13, a quantization parameter is selected for each block of the picture such that the overall distortion of the picture or the overall quality is flattened over the whole picture. Known RDO tools aims at minimizing the distortion given a rate constraint at block level. In contrast, according to the present principle, the distortion is "equalized" over the whole picture.

For this, in step 131, a target overall distortion Go is computed for the picture. A same initial quantization parameter $QP_g$ is assigned to each block of the picture. Such an initial quantization parameter $QP_g$ may be for instance a nominal QP assigned to the picture by the encoder. Then, the distortion for each block is obtained using the trajectory curve of the class associated with the block for $QP_g$. That is for a block associated with a trajectory class k, the distortion is given by $M_k(QP_g)$.

According to a variant, the target overall distortion Go is then computed by averaging the distortions $M_k(QP_g)$ of the blocks of the picture.

According to another variant, for preserving the same global quality as the quality decided by the encoder to encode the current frame, the target overall distortion Go is computed as a combination of a robust absolute perceptual metric and a robust flattening score by:

$$G_0 = M_{k\_50\%} + a*(M_{k\_99\%} - M_{k\_50\%}),$$

where:

- $M_k\_50\%$ is the median distortion score on the picture,
- $M_k\_99\%$ is the distortion of the 99% quantile on the picture, i.e. the distortion such that 99% of the blocks are below that threshold,
- a is a factor to balance absolute quality and flattening score.

In step 132, a quantization parameter (QP) map is determined for the picture. Such QP map comprises for each block of the picture an assigned QP.

As the function $M_k(QP)$ is invertible, for each block b of a trajectory class k, a $QP_b$ can be assigned to the block b with $QP_b = M_k^{-1}(G_0)$.

Note that the target quality Go can be chosen as any metric, as long as it exists an invertible function M representing a relationship between the QP and the distortion. A typical example is to define M simply as the PSNR. In this case, this method will try to give the same local PSNR as the global PSNR. Another metric can be chosen as the WQA score.

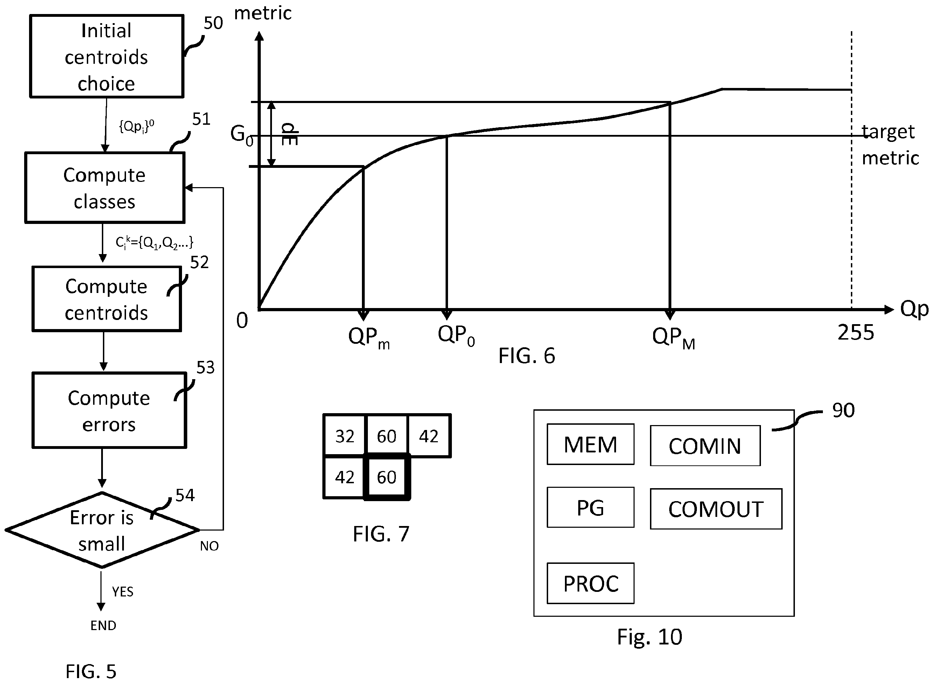

In step 16, the picture is then encoded using the QP map determined at step 132. The encoding of the picture is further disclosed in relation with figure 10.

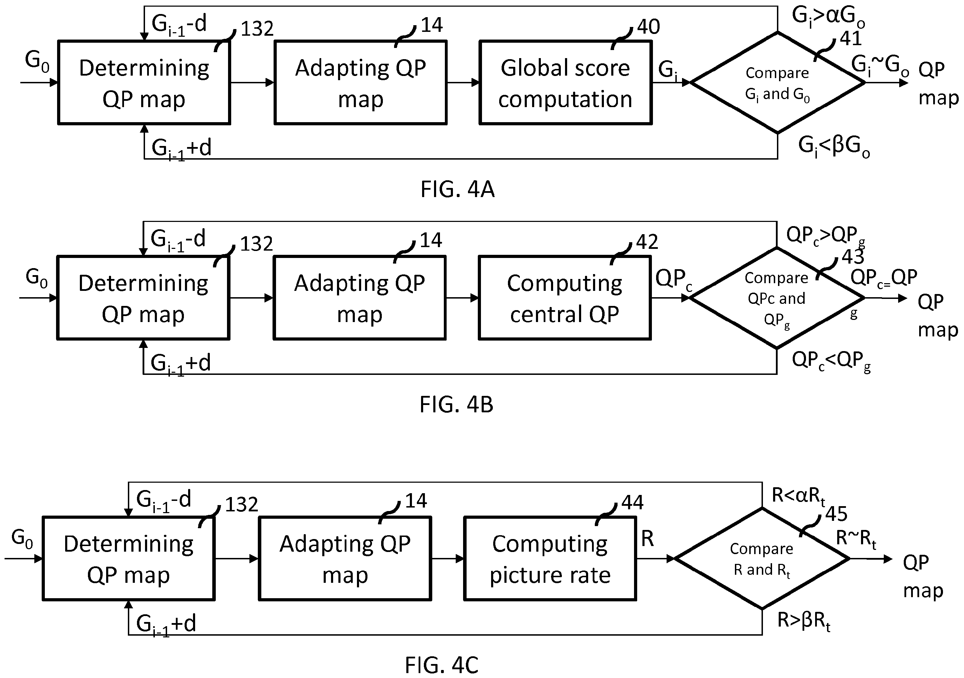

According to an embodiment of the present disclosure, before encoding the picture, the QP map is further adapted according to coding constraint in an optional step 14. Step 14 is further detailed in relation with figure 5. When adapting the QP map to coding constraint, the overall distortion $G_0$ of the picture may have changed and may not be flattened over the whole picture. Therefore, the steps 131, 132 and 14 may be iteratively performed in order to converge to a flattened overall distortion over the whole picture. Embodiments of such iterative methods are disclosed below in relation with figures 4A, 4B and 4C.

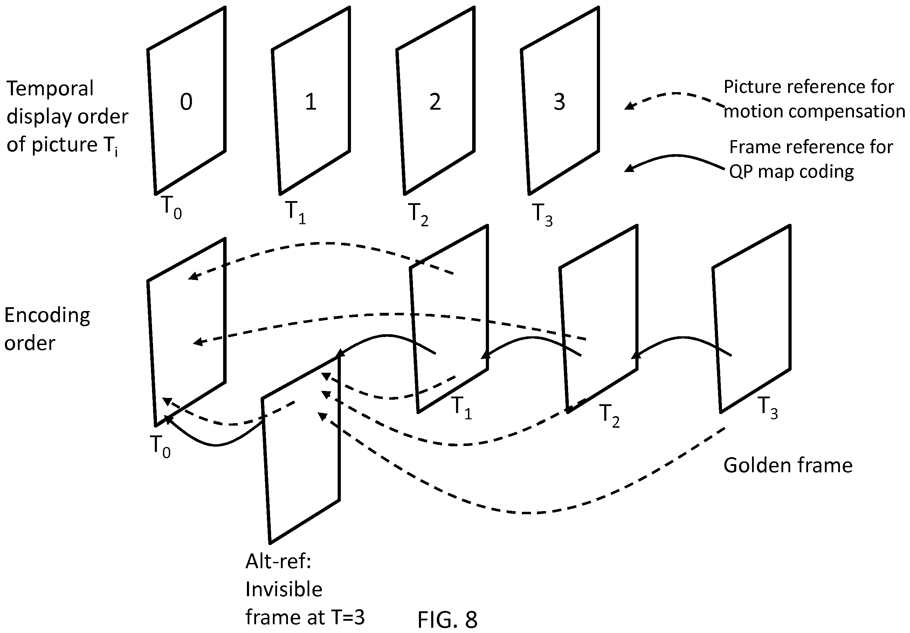

According to an embodiment of the present disclosure, before encoding the picture, the QP assigned to the blocks of the picture (QP map) are further refined in an optional step 15, for reducing the coding cost of the QP map. Step 15 is further detailed below in relation with figures 7 and 8.

The goal of the offline learning (step 10 of figure 1) is to create a set of classes used to later classify each block of a picture to encode. The classification is based on the block trajectory (D-Q curve). The trajectory shows the change in quality function of the $QP_g$. This function is calculated by fitting a curve to the raw data points {QP,metric} obtained in the offline learning method.

Figure 2A illustrates a flow diagram of an exemplary method for generating learning data (step 101 from figure 1).

In step 20, a set of learning pictures is encoded using different values of $QP_g$ from a set of learning QPs, ranging for instance from 0 to 255. Encoding of the learning pictures may be performed according to any video compression schemes.

In step 21, the quality of each encoded picture and at each different value of $QP_g$ is assessed using a chosen metric. For instance, the WQA (wavelet-based quality assessment) metric is chosen. Such a metric gives a score of the distortion per pixel but it is computed using the whole image.

In step 22, the reconstructed pictures are partitioned into a set of blocks of the same size as in step 11 from figure 1. The metric, WQA in our example, is computed for each block of the pictures. For instance, the WQA metric for a block is computed as an average of the WQA metric of the pixels in the block.

Note that any other metric giving a score per block may also be suitable here.

The generating of learning data results in block raw data comprising for each block of a picture from the set of learning pictures a set of QP and associated metric value.

Figure 2B illustrates a flow diagram of an exemplary method for generating trajectories classes (step 102 from figure 1).

In step 23, the block raw data are modeled by fitting a curve to the raw data points for each block of the learning pictures. As the chosen metric relies on a global approach, it may not vary monotonously for each block. As it is desirable that the function $M_k(QP)$=wqa is invertible, the monotony of the modeled curve is enforced. The monotony can be enforced in several ways:

- "soft monotony": the raw data are made monotonic and the fitting is made normally (for example using a Least Square Fitting of a polynomial function). The resulting trajectory is not necessarily monotonous but the resulting curve is improved.
- "hard monotony": during the fitting, a hard monotony constraint is added (for example using a convex optimization approach).

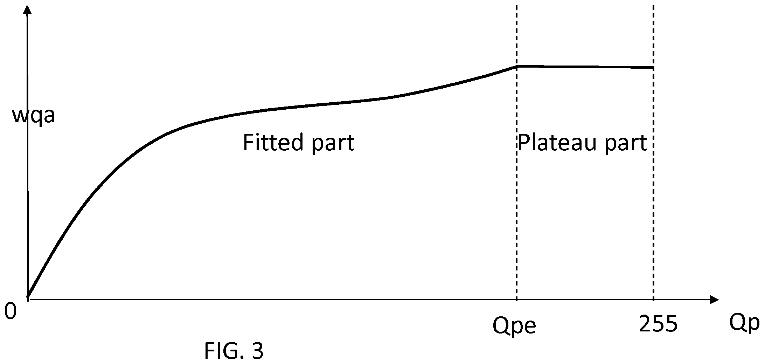

After modeling of the block raw data to trajectory, it appears that many block trajectories can be decomposed into two parts, as illustrated on figure 3:

- an increasing distortion part (fitted part on figure 3)
- a "plateau" part where the error is almost stable, in practice, it means all the "texture" of the block has been removed and the block quality is then constant.

Knowing these properties for coding the picture, the fitting is performed up to the plateau part, and an additional parameter $QP_e$ gives the start of the plateau.

In step 24, after each block of the test set has been modeled to a trajectory curve, the trajectories need to be clustered into N classes. In order to do this, a clustering algorithm, like a k-means algorithm, in the trajectories space, for example the polynomial functions here, is performed. Alternatively, the final trajectory classes can be refined by recomputing the final class trajectory using the raw data of the previous step.

Once a trajectory class has been decided, all associated trajectories samples of the class are used to compute two properties for the class: the rate trajectory and the metric trajectory.

From the encoding step 20, the bitrate associated with a given QP is known for each block of the learning pictures set. So, for a given trajectory class k, a model fitting using such rate data of the blocks belonging to the class k, can be performed in order to associate a rate for each QP. A function $R_k(QP)$ is thus obtained which gives the rate of a block of the class k for a given QP.

For a given class k, the relationship between the QP and the metric is given by the function $M_k(QP)$ which gives the metric (or distortion) of a block of the class k for a given QP. Such function $M_k(QP)$ for the class k is obtained as the centroid trajectory of the class k.

At the end of step 102, a set of trajectory classes $\{T_k\}_N$ comprising two curves $M_k(QP)$ and $R_k(QP)$ is delivered for later use for block classification when encoding a video sequence.

Figure 4A illustrates a flow diagram of an exemplary method for generating a quantization parameter map according to an embodiment of present disclosure.

According to this embodiment, in order to take into account the final QP map, after adaptation at step 14 from figure 1, the QP of each block of a picture to encode is refined iteratively. In this embodiment, it is desired to preserve the target quality of the picture to encode, and thus not to change the target overall distortion $G_0$.

According to this embodiment, once the QP map has been adapted to coding constraint, the overall distortion $G_i$ for the picture to encode is computed in step 40. The overall distortion $G_i$ is computed according to the adapted QP map and the trajectory curve associated with each block of the picture. For instance, the overall distortion $G_i$ is computed as disclosed with step 131 of figure 1 but using for each block b of the picture, the $QP_b$ assigned to the block b in the adapted QP map. That is, the distortion of the block b is thus given by $M_k(QP_b)$ where k is the trajectory class to which the block b belongs and $M_k$ is the trajectory of the class k.

In step 41, the overall distortion $G_i$ and the target overall distortion Go are compared. If the overall distortion $G_i$ is higher than a first threshold depending on the target overall distortion $G_0$, i.e $G_i > \alpha \times G_0$, then the target overall distortion $G_0$ is reduced by a change factor d. This results in a small change in the input quality target of the picture.

If the overall distortion $G_i$ is lower than a second threshold depending on the target overall distortion $G_0$, i.e $G_i < \beta \times G_0$, then the target overall distortion $G_0$ is increased by a change factor d. This results in a small change in the input quality target of the picture.

If the overall distortion $G_i$ is between the first and second thresholds values, i.e $\alpha \times G_0 > G_i > \beta \times G_0$, the target overall distortion $G_0$ is not changed and the adapted QP map is delivered to the next steps of the method for encoding the picture. For instance, $\alpha$ and $\beta$ may be set to 0,05 or to any values (e.g. 1) leading to threshold values for which a value of the overall distortion $G_i$ being between the two thresholds is an appropriate approximation of the target overall distortion $G_0$.

If the target overall distortion Go is changed at step 41, steps 132, 14, 40 and 41 are iterated until said the overall distortion $G_i$ is between the first threshold and the second treshold or until a number of iterations has been reached.

Figure 4B illustrates a flow diagram of an exemplary method for generating a quantization parameter map according to another embodiment of present disclosure. According to this embodiment, it is desired to preserve the nominal QP decided by the encoder to encode the current picture.

In step 42, a central QP ($QP_c$) of the QP map is computed. For instance, the central QP of the QP map is the median QP of the N sorted QPs of the QP map.

In step 43, the central $QP_c$ and the nominal $QP_g$ are compared.

If the central $QP_c$ is higher than the nominal $QP_g$, i.e $QP_c > QP_g$, then the target overall distortion Go is reduced by a change factor d.

If the central $QP_c$ is lower than the nominal $QP_g$, i.e $QP_c < QP_g$, then the target overall distortion Go is increased by a change factor d.

If the central $QP_c$ equals to the nominal $QP_g$, the target overall distortion Go is not changed and the adapted QP map is delivered to the next steps of the method for encoding the picture. Note that the ending condition here is the equality of the central $QP_c$ or the oscillation of the central $QP_c$ around the nominal $QP_g$ in case the nominal $QP_g$ is not reachable.

If the target overall distortion $G_0$ is changed at step 41, steps 132, 14, 42 and 43 are iterated until the central $QP_c$ equals to the nominal $QP_g$ or until a number of iterations has been reached.

Figure 4C illustrates a flow diagram of an exemplary method for generating a quantization parameter map according to another embodiment of present disclosure. According to this embodiment, it is desired to preserve the nominal rate $R_t$, wherein the nominal rate is the rate of the picture using the nominal $QP_g$ or directly the target rate given by the encoder.

In step 44, an overall rate R for the picture according is computed using the adapted QP map and the rate curve $R_k(QP)$ associated with each block of the picture. For instance, for each block b of the picture, the rate $R_b$ is given by $R_k(QP_b)$ where k is the trajectory class to which the block b belongs and $R_k$ is the rate function of the class k and $QP_b$ is the QP assigned to block b in the QP map. The rate R of the picture is then given by the sum of the rate $R_b$ of all the blocks of the picture.

In step 45, the rate R and the nominal rate $R_t$ are compared. If the rate R is lower than a first threshold depending on the nominal rate $R_t$, i.e $R < \alpha \times R_t$, then the target overall distortion $G_0$ is reduced by a change factor d.

If the rate R is higher than a second threshold depending on the nominal rate $R_t$, i.e $R > \beta \times R_t$, then the target overall distortion $G_0$ is increased by a change factor d.

If the rate R is between the first and second thresholds values, i.e $\alpha \times R_t < R < \beta \times R_t$, the target overall distortion Go is not changed and the adapted QP map is delivered to the next steps of the method for encoding the picture. For instance, $\alpha$ and $\beta$ may be set to 0,05 or to any values (e.g. 1) leading to threshold values for which a value of the rate R being between the two thresholds is an appropriate approximation of the nominal rate $R_t$.

If the target overall distortion Go is changed at step 41, steps 132, 14, 40 and 41 are iterated until the rate R is between the first threshold and the second treshold or until a number of iterations has been reached.

Figure 5 illustrates a flow diagram of an exemplary method for adapting a QP map according to an embodiment of he present disclosure. For instance, the QP map is a QP map obtained from step 13 disclosed with figure 1.

An objective of adapting the QP map is to transform a map of arbitrary QPs into a map of N QPs. N can be for example in a range 2 to 8 as in a VP9/VP10 coder.

According to this embodiment, adapting the QP map is performed by applying a clustering method like a k-means algorithm. However, according to the present disclosure, classical k-means algorithm cannot be used as is for adapting the QP map.

According to the present disclosure, it is to be noted that the QP of each block comes from a particular function $M_k$ which may contain a plateau part, as illustrated by figure 3. Therefore, even if a block b is assigned a particular quantization parameter $Q_b$, if $Q_b$ is in the interval [Qpe, 255], then any quantization parameter in the interval [Qpe,255] is suitable for the block b, since all quantization parameters within this interval will provide the same distortion for the block b.

It is also to be noted that a difference in quality provided between 2 QPs very closed can be cancelled by the overhead due to the coding of the QP map.

Below, a k-means algorithm taking into account the above contraints is disclosed for adapting the QP map according to coding constraints.

In step 50, N initial centroids are selected wherein each class i has one initial centroid $C_i$. For instance, the initial centroids are taken at regular interval in the range of QPs from the QP map. Step 50 delivers a set of initial centroids $\{C_i\}^0 = \{QP_i\}^0$.

In step 51, the N classes are computed. In a standard k-means algorithm, the class computation is done as:

$$C(QP) = \arg\min_{C_i} \|QP - C_i\|,$$ where $C_i$ is the centroid of the class i and C(QP) is the class of the quantization parameter QP. It means that each value QP is associated with the nearest centroid $C_i$.

In order to take into account the plateau of the $M_k$ function from the trajectory classes, if a given value QP assigned to a block b in the QP map belongs to the plateau part of the $M_k$ function associated with the block b, the value of QP assigned to a block b is then associated with several centroids if the centroids are in the plateau interval:

$$C(QP) = \{C_k\},$$

$$if\ QP \notin [QPe, 255], \nexists\ C_i \in [QPe, 255] \Rightarrow \{C_k\} = \arg\min_{C_i} \|QP - C_i\|$$

$$if\ QP \in [QPe, 255] \Rightarrow \{C_k\}|C_k \in [QPe, 255]$$

In step 52, the new centroids of each class determined at step 51 is computed. In the standard k-means algorithm, the centroid computation is done as:

$$C_k^{n+1} = \frac{1}{N} \sum_{i=1}^{N} QP_i \, , QP_i | \, C(QP_i) = C_k^n$$

i.e. the new centroid $C^{n+1}$ of the class k is the average of all the elements of the class k at previous step n.

In order to take into account the plateau part of the function associated with the blocks, for a given value QP, the average is computed in 2 steps.

Let's denote by $\{QP_i^{np}\}$ the values of QP which do not belong to the plateau interval and $\{QP_i^{p}\}$ the values of QP which belong to the plateau interval:

$$D_k^{n+1} = \frac{1}{N} \sum_{i=1}^{N} QP_i^{np} \quad , \text{ where N is the number of QP which do not belong to the plateau interval.}$$

Then $C_k^{n+1} = \frac{1}{N+M} \left( \sum_{i=1}^{N} QP_i^{np} + \sum_{i=1}^{M} \max(QPe_i^{p}, D_k^{n+1}) \right)$ , where M is the number of QP which belong to a plateau interval, and $QPe_i^{p}$ is the beginning of the plateau for the value $QP_i^{p}$.

Here, when considering if a QP belongs to a plateau interval, it should be understood that the plateau interval considered is the plateau interval of the function associated with the block b to which the QP has been assigned in the QP map. Therefore, from a same value of QP in a class k, the QP value could belong to the plateau part of the function for a first block $b_1$ and not for a second block $b_2$.

Acording to the present disclosure, it means elements in a plateau part will participate to the centroid computation such as the elements in a plateau part move the less possible the average of the class to which they belong.

In step 53, error for each class i of QPs is computed. In the k-means algorithm, the error for a class is computed as:

$$E_k = \sum_{i=1}^{N} |C_k - QP_i|$$

Using the same method as above, the error computation is adapted as follows:

$$E_k = \sum_{i=1}^{N} |C_k - P_i|$$

with

$$P_i = QP_i \, if \, QP_i \notin [QPe, 255]$$

$$P_i = \max(QPe - C_k, 0) \quad if \, QP_i \in [QPe, 255]$$

In step 54, the error $E_k$ is compared to a threshold. If the error $E_k$ is small, that is if the error $E_k$ is below the treshold, the clustering method ends, otherwise, the clustering is iterated from step 51 to 54.

According to an embodiment of the present disclosure, in the k-means algorithm, the centroid computation is classically done by averaging the elements of the class. This could result in a centroid value being a non integer value and centroid values very close from each other. In order to avoid this, after the centroid computation, each class are compared to the other one in integer values:

$$T_{k1,k2} = |\lceil C_{k1} \rceil - \lceil C_{k2} \rceil \, |$$

If the value $T_{k1,k2}$ is below a threshold, then the classes are merged. In this case, a new class can be re-inserted at the next iteration.

According to another embodiment of the present disclosure, the number of centroids may be below the target number, of classes. Such a target number may be for instance a hard constraint of N classes equals to 8 in a VP9 encoder. The number of centroids may be below the target number for example because of classes merging as disclosed below. According to this embodiment, the clustering method will try to insert a new centroid to well balance the centroids. The new class centroid is chosen as an initial guess to minimize the global error, for example by taking the value between the centroids the most apart.

According to an embodiment of the present disclosure, the number of different quantization parameters of the QP map depends on a target bitrate for the picture. It means that the number of QP classes, and thus the number of centroids, depends on the target bitrate for the picture to encode.

When the rate allocated for a picture is becoming low, the overhead of the cost for encoding the QP map can become too high, compared to the gain in perceptual metric for the picture. Therefore, when adapting the QP map at step 14 from figure 1, the maximum number of centroids is adapted so as to adapt to the cost of the QP map to the rate allocated to the picture to encode. Such an adaptation can be performed for instance by adapting the number of centroids as a function of the nominal quantization parameter $QP_g$. For instance, at low QP (high bitrate), 8 classes may be used for the QP map, at high QP (for instance $QP_g$=250), only one class may be used for the whole image, for intermediate QP value, for instance $QP_g$=125, 4 classes may be used for the QP map.

According to an embodiment of the present disclosure, in order to decrease the coding cost of the QP map, refining of the QP assigned to each block in the QP map is performed at step 15 from figure 1. According to other variants, such a step 15 could also be performed in any one of the embodiments disclosed with figures 4A, 4B or 4C.

According to this embodiment, for each block, the block trajectory, i.e the function $M_k$ representing the metric (distortion) function of the QP is known, as well as the target overal distortion $G_0$. By setting a maximum metric error $dE$, it is possible to deduce for each block an admissible range of QP $[QP_m,QP_M]$, as disclosed in figure 6.

According to a variant, the QP map is encoded using spatial neighboring for determining a context of an entropy coder. Figure 7 illustrates such a spatial neighboring for a current block (represented with thicker lines) of the QP map. In order to reduce the cost of the QP map, the QP for each current block should be as similar as possible to the QP of its neighboring blocks.

For this, for each block of the QP map, a median QP value is computed from the QP values assigned to the neighboring blocks. If the median is inside $[QP_m,QP_M]$ interval of the admissible range of QP, the QP for the current block is set to the median.

Otherwise, for each neighbor block of the causal neighboring of the current block, if the QP value assigned to the neighbor block is inside the $[QP_m,QP_M]$ interval of the admissible range of QPs of the current block, the QP value of the current block is set to the QP value assigned to the neighbor block.

Otherwise, the QPvalue of the current block is kept to the original $QP_0$ value assigned to the block in the QP map.

According to another variant, the QP map is encoded using temporal encoding, that is using the co-located block in the last frame for the context of the entropic coder.

In order to reduce the cost of QP map, the QP assigned to a current block should be set as similar as possible as the QP assigned to the co-located block.

For this, for each of the QP map, if the value of the co-located block is inside the $[QP_m,QP_M]$ interval of the admissible range of QPs of the current block, the QP of the current block is set to the QP value assigned to the co-located block. Otherwise, the QPvalue of the current block is kept to the original $QP_0$ value assigned to the block in the QP map.

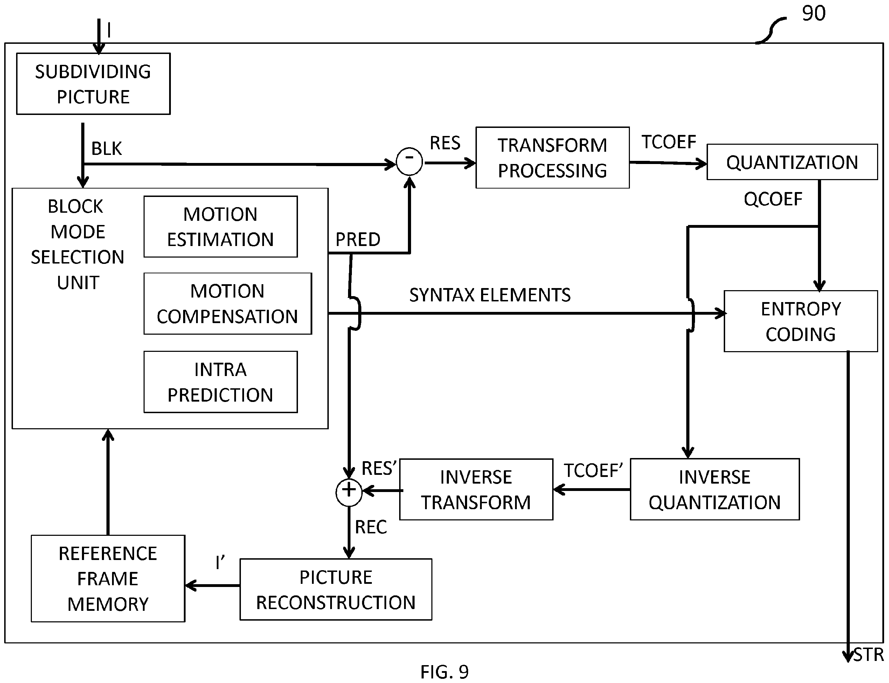

Figure 9 illustrates a block diagram of an exemplary video encoder according to an embodiment of the present disclosure. Such a video encoder 90 performs the encoding of a set of pictures of a video into a bitstream according to an embodiment of the present principle. The video encoder 90 performs the encoding of the pictures according to any video coding standards such as H.266, HEVC/H.265, AVC/H.264, VP9/VP10 or any proprietary video coding system. Classically, the video encoder 90 may include several modules for block-based video encoding, as illustrated in figure 9. A picture I to be encoded is input to the encoder 90. The picture I is first subdivided into a set of blocks by a subdividing module. Each block BLK of the picture I is then processed for encoding. A block BLK may have size ranging from 4x4 to 128x128 pixels. Usually but not necessarily, the size of a block BLK is a power of 2.

The encoder 90 comprises a mode selection unit for selecting a coding mode for a block of a picture to be coded, e.g. based on a rate/distortion optimization, such a mode selection unit comprising:

- a motion estimation module for estimating motion between one current block of the picture to be coded and reference pictures,
- a motion compensation module for predicting the current block using the estimated motion,
- an intra prediction module for spatially predicting the current block.

The mode selection unit delivers prediction blocks PRED and the corresponding syntax elements to be coded in the bitstream for performing the same block prediction at the decoder.

Residual blocks RES are then obtained from the blocks of the picture to be coded and the prediction blocks PRED. The residual blocks RES are transformed by a transform processing module delivering transformed residual coefficients TCOEF. The transformed residual coefficients are then quantized by a quantization module delivering quantized residual transform coefficients QCOEF.

In the present disclosure, the residual blocks RES are quantized after transformation using a quantization parameter QP assigned to the blocks in the QP map as disclosed in any one of the embodiments disclosed above.

The syntax elements and quantized residual transform coefficients QCOEF are then input to an entropy coding module to deliver coded video data.

The quantized residual transform coefficients QCOEF are processed by an inverse quantization module and inverse transform module for reconstructing residual blocks RES'. Inverse quantization of coefficients of a block is performed using the quantization parameter QP assigned to the blocks in the QP map as disclosed in any one of the embodiments disclosed above.

Prediction blocks PRED are added to the reconstructed residual blocks RES' for reconstructing blocks forming reconstructed blocks REC. The reconstructed blocks REC are stored in memory for use by a picture reconstruction module. The picture reconstruction module performs reconstruction of a decoded version I' of the picture I from the reconstructed blocks REC. The reconstructed picture I' is then stored in a reference picture memory for later use as a reference picture for encoding the following pictures of the set of pictures to code or for encoding subsequent blocks of the picture I.

The determining of the QP map as disclosed in any one of the embodiments disclosed with figures 1 to 7 may be performed in a first coding pass of the encoder, before the mode selection unit performs mode selection for a block to be coded or before the picture I to encode is input to the encoder 90. The encoder 90, then, uses the quantization parameter assigned to the blocks in the QP map when quantizing the coefficients of a current block to encode.

When encoding a current picture I, the QP map for the current picture I determined according to any one of the embodiments disclosed above should be encoded into the bitstream such that a decoder can use the same quantization parameters for decoding the blocks of the picture I as in the encoding stage.

According to an embodiment of the present disclosure, the QP map comprises a header wherein an index is assigned to each different value of QP in the QP map. That is, if the QP map comprises N classes of QPs, the header comprises N-1 index, index 0 corresponding to the default QP of the frame ($QP_g$). The QP map also comprises a map of index wherein an index is assigned to each block of the QP map.

The QP map for a picture is then encoded by encoding data representative of the header and encoding data representative of the map of index. The map of index is encoded by the entropy coding module by using for each block of the map a spatial prediction from causal neighborhood of the block in the map or a temporal prediction from a co-located block of the index map coded with the last coded picture.

The index map may be used by the encoder to share other parameters for encoding the block of the index map. For instance in a VP9 encoder, the header disclosed above is used for assigning to a given index (also knwon as segment-ID in the VP9 encoder) encoding features to the blocks to which the index has been assigned in the index map. Such encoding features may be for example: restrictions on the reference frames that can be used for each index, coefficients skips, quantization parameter, loop filter strength, transform size options.

In the present disclosure, an effect of sharing the index for several encoding features is the limitation of the number of different QPs for the picture.

From one picture to another, the elements of the QP map (header, index map) may not all be encoded. Several coding modes for a QP map of a picture are possible.

The QP map may be completely refreshed, that is the index value of each block of the map as well as the header are encoded.

Or, only the header of the QP map is refreshed, that is only the QP values assigned to the index are updated, the index assigned to the blocks in the index map are unchanged.

Or, the QP map is unchanged, that is the same QP values are assigned to the same index and the index map is kept unchanged. In this mode, the QP map from the last coded picture is fully reused for the current picture to encode.

According to this embodiment, in order to improve the balance between rate and perceptual distortion, QP map encoding policy are proposed below according to the type of picture to encode.

For each picture to encode, QP map encoding modes that may be chosen are illustrated in table 1, with the effect on rate and distortion associated with each encoding mode, wherein the sign "+" means an increasing effect on the rate or distortion and the sign "-" means a decreasing effect.

**Table 1**

| | Effect on rate | Effect on distortion |
| --- | --- | --- |
| Refresh header + refresh map data | +++ | - |
| Refresh only map data | ++ | - |
| Refresh only header | ~0 | |
| Refresh nothing == propagate | 0 | +++ |
| Disable QP map | 0 | ++ |

For an intra-coded picture, that is a picture coded only using spatial prediction, the header and index map of the QP map should always be refreshed, when the adaptive QP tool is enabled at the encoder.

For inter-coded pictures, that is a picture coded by reference to previous coded pictures, any one of the choices from table 1 may be valid.

Typically, for inter-coded pictures with a high rate, the index map should be refreshed. According to an embodiment of the present disclosure, in order to keep a consistent set of QPs, in the case of inter-coded pictures, the QP values assigned to the index in the header of the QP map are not changed. Only the index map is adapted. It means that for this encoding mode of the QP map, in the QP map clustering as disclosed with figure 5, the value of each centroid of the QP class is known.

For inter-coded pictures at low rate, the index map could be propagated without introducing any distortion. For such pictures, the additional coding cost of the QP map can be too high, especially for the pictures coded at deep temporal layer. For this type of pictures, the QP map should be disabled.

A problem by doing so is that the QP map which can be used for temporal coding for the next coded frame is lost. On the other hand, keeping the QP map, by using the propagation mode, will increase the distortion because the QP map determined for the current picture is not necessarily aligned with the QP map determined and encoded for the previous picture. According to this embodiment, the "Refresh header only" mode is used wherein the index map is propagated, but the QP map is disabled by setting the QP of each index to a same value of QP. By doing so, the index map is still available for entropic coding for future frames but no distortion is introduced by not updating the index map.

For a particular type of pictures, known as golden frames in a VP9 standard, a special map should be built.

A golden frame is picture which is encoded using a reference to an "alt-ref" picture. An alt-ref picture is a picture encoded in the bitstream but which is an invisible picture as the alt-ref picture is not intended for display. The alt-ref picture is only coded for later use as a reference picture.

The alt-ref picture is a picture temporally co-located with the golden frame, as disclosed in figure 8. For the golden frame, it is desirable to use exactly the block of the co-located alt-ref picture. One problem arising is that the rate-distortion choices made to encode the golden frame might be inconsistent with the rate-distortion choices of the alt-ref picture because the QP map has changed in between, as disclosed by figure 8.

In order to preserve the quality of the golden frame, when encoding the QP map for the golden frame, the index map is not refreshed, that is the index map of the last coded picture is used. The header of the QP map is refreshed such as, for each index, instead of encoding a QP value, a skip-flag set to a value of 1 is encoded.

By doing so, the whole golden frame is encoded as a full skip of blocks, resulting in the exact copy of the co-located alt-ref picture.

Figure 10 illustrates the simplified structure of an apparatus (90) for encoding a video according to an embodiment of the present principle. Such an apparatus 90 is configured to implement the method for encoding a video according to the present principle according to any embodiments disclosed above. The functional units of the encoder apparatus 90 have been disclosed in reference to figure 9. The structural apparatus 90 disclosed below may be configured to implement each of these functional units individually or in combination, and according to any one of the embodiments of the principle disclosed above.

The structural apparatus 90 may also be configured to implement the method for determining a QP map as disclosed in any one of the embodiments descirbed with figures 1 to 8.

According to an embodiment, the encoder apparatus 90 comprises a processing unit PROC equipped for example with a processor and driven by a computer program PG stored in a memory MEM and implementing the method for encoding a video according to the present principle.

At initialization, the code instructions of the computer program PG are for example loaded into a RAM (not shown) and then executed by the processor of the processing unit PROC. The processor of the processing unit PROC implements the steps of the method for encoding a video which has been described here above, according to the instructions of the computer program PG.

The encoder apparatus 90 comprises a communication unit COMOUT to transmit an encoded bitstream STR to a data network.

The encoder apparatus 90 also comprises an interface COMIN for receiving a picture or a video to encode.

**Claims**

1. A method for encoding a video comprising:

   - associating (12) to each block of a picture from said video, a first curve giving quantization parameters in function of distortion values,
   - computing (131) a target overall distortion for said picture according to a same initial quantization parameter assigned to each block of the picture and using for each block said associated first curve,
   - determining (132) a quantization parameter map for said picture comprising:

     - assigning for each block, a quantization parameter given by said first curve associated with said block for said target overall distortion,

   - encoding (16) said picture using said quantization parameter map.

2. The method for encoding according to claim 1, further comprising:

   - adapting the quantization parameter map according to a coding constraint for coding said quantization parameter map.

3. The method for encoding according to claim 2, further comprising:

   - computing an overall distortion for said picture according to said adapted quantization parameter map and the first curve associated with each block of the picture,
   - comparing said overall distortion and said target overall distortion:

     - if said overall distortion is higher than a first threshold depending on said target overall distortion, reducing said target overall distortion of a first change factor,
     - if said overall distortion is lower than a second threshold depending on said target overall distortion, increasing said target overall distortion of a second change factor,

   - iterating determining a quantization parameter map for said picture, adapting the quantization parameter map according to a coding constraint, computing an overall distortion for said picture and comparing said overall distortion and said target overall distortion, until said overall distortion is between said first threshold and said second treshold or until a number of iterations is reached.

4. The method for encoding according to claim 2, further comprising:

   - computing a central quantization parameter from the quantization parameter map,
   - comparing said central quantization parameter and said initial quantization parameter:

     - if said central quantization parameter is lower than a first threshold depending on said initial quantization parameter, reducing said target overall distortion of a first change factor,
     - if said central quantization parameter is higher than a second threshold depending on said initial quantization parameter, increasing said target overall distortion of a second change factor,

   - iterating said determining a quantization parameter map for said picture, adapting the quantization parameter map according to a coding constraint, computing computing a central quantization parameter and comparing said central quantization parameter and said initial quantization parameter, until said central quantization parameter equals said initial quantization parameter or until a number of iterations is reached.

5. The method for encoding according to claim 2, wherein each block of the picture is associated with a second curve representing quantization parameters in function of rate values, said method further comprising:

- computing an overall rate for said picture according to said adapted quantization parameter map and the second curve associated with each block of the picture,
- comparing said overall rate and a target rate for said picture:

- if said overall rate is lower than a first threshold depending on said target rate, reducing said target overall distortion of a first change factor,
- if said overall rate is higher than a second threshold depending on said target rate, increasing said target overall distortion of a second change factor,

- iterating said acts of determining a quantization parameter map for said picture, adapting the quantization parameter map according to a coding constraint, computing an overall rate for said picture and comparing said overall rate and said target rate, until said overall distortion is between said first threshold and said second treshold or until a number of iterations has been reached.

6. The method according to any one of claims 2 to 5, wherein adapting the quantization parameter map uses a K-mean clustering method for reducing the number of quantization parameters of the map.

7. The method according to claim 6, wherein said K-mean clustering comprises computing quantization parameter classes wherein for a quantization parameter assigned to a block said quantization parameter is associated with each quantization parameter class which comprises a centroid on said plateau.

8. The method according to claim 6 or 7, wherein said K-mean clustering comprises computing quantization parameter classes centroids wherein for a quantization parameter assigned to a block, said quantization parameter belonging to a plateau part of a first curve associated with said block, a value taken into account for computing a class centroid corresponds to a maximum value selected from a first quantization parameter of the plateau part of the first curve to which the quantization parameter belongs or a mean value of quantization parameters of the class which do not belong to the plateau part.

9. The method according to any one of claims 6 to 8, wherein said K-mean clustering comprises error computing of a class wherein for a quantization parameter assigned to a block, said quantization parameter belonging to a plateau part of a first curve associated with said block, error is computed by taking into account a maximum value selected from a difference computed as a first quantization parameter of the plateau part of the first curve to which the quantization parameter belongs minus a value of the centroid of the class or a zero value.

10. The method according to any one of claims 2 or 6 to 9, wherein the number of different quantization parameters of the map depends on a target bitrate for the picture.

11. The method according to any one of claims 2 or 6 to 10, further comprising, for at least one block of said picture, refining said quantization parameter assigned to said at least one block according to a spatial neighbor block of said at least one block or according to a block co-located with said at least one block in a last encoded frame.

12. The method according to any one of claims 1 to 11, wherein said quantization parameter map comprises a number N of different values of quantization parameter, and wherein said quantization parameter map comprises a header assigning an index to each different value of quantization parameter and a map of index wherein an index is assigned to each block of said picture, said method further comprising encoding said quantization parameter map comprising:

- encoding data representative of said header,
- encoding data representative of said map of index.

13. The method according to claim 12, wherein for a picture coded in an inter-frame mode, subsequent to said picture, a header of said subsequent picture is a same header as the header of said picture.

14. The method according to any one of claims 12 or 13, wherein for a picture coded at a predetermined temporal layer, said N different values of quantization parameter are set to a same quantization parameter value in the header.

15. The method according to any one of claims 12 or 14, wherein for a first picture co-located to a reference picture coded only for use as a reference picture, said first picture being inter-coded from said reference picture, at least one second picture being coded between said reference picture and said first picture, a skip flag set to a value 1 is assigned to each index of a header of a quantization parameter map of said first picture instead of a quantization parameter value.

16. An apparatus for encoding a video comprising:

- means for associating to each block of a picture from said video, a first curve giving quantization parameters in function of distortion values,
- means for computing a target overall distortion for said picture according to a same initial quantization parameter assigned to each block of the picture and using for each block said associated first curve,
- means for determining a quantization parameter map for said picture comprising:

- means for assigning for each block, a quantization parameter given by said first curve associated with said block for said target overall distortion,

- means for encoding said picture using said quantization parameter map.

FIG. 1

**FIG. 2A**

Set of learning QP (1..255) → / Set of learning images →

101

**Encoding** — 20

↓

**metric** — 21

↓

**Block partioning** — 22

↓

Block raw data {QP, metric}

**FIG. 2B**

Block raw data {QP, metric} →

102

**Data modeling** — 23

↓

**Trajectory clustering** — 24

↓

Trajectories classes $\{T_k\}_N$

EP 3 328 083 A1

FIG. 3

EP 3 328 083 A1

$G_0$ → Determining QP map (132) [$G_{i-1}-d$, $G_{i-1}+d$] → Adapting QP map (14) → Global score computation (40) → $G_i$ → Compare $G_i$ and $G_o$ (41) → $G_i>\alpha G_o$ / $G_i \sim G_o$ QP map / $G_i<\beta G_o$

FIG. 4A

$G_0$ → Determining QP map (132) [$G_{i-1}-d$, $G_{i-1}+d$] → Adapting QP map (14) → Computing central QP (42) → $QP_c$ → Compare $QP_c$ and $QP_g$ (43) → $QP_c>QP_g$ / $QP_{c=}QP_g$ QP map / $QP_c<QP_g$

FIG. 4B

$G_0$ → Determining QP map (132) [$G_{i-1}-d$, $G_{i-1}+d$] → Adapting QP map (14) → Computing picture rate (44) → R → Compare R and $R_t$ (45) → $R<\alpha R_t$ / $R \sim R_t$ QP map / $R>\beta R_t$

FIG. 4C

## FIG. 5

```
┌─────────────┐
│   Initial   │ 50
│  centroids  │
│   choice    │
└─────────────┘
       │ {Qp_i}^0
       ▼
┌─────────────┐ 51
│   Compute   │◄──────┐
│   classes   │       │
└─────────────┘       │
       │ C_i^k={Q_1,Q_2...}  │
       ▼              │
┌─────────────┐ 52    │
│   Compute   │       │
│  centroids  │       │
└─────────────┘       │
       │              │
       ▼              │
┌─────────────┐ 53    │
│   Compute   │       │
│   errors    │       │
└─────────────┘       │
       │              │ NO
       ▼              │
   ◇─────────◇ 54     │
  ╱  Error is  ╲──────┘
  ╲   small    ╱
   ◇─────────◇
       │ YES
       ▼
      END
```

FIG. 5

FIG. 6

FIG. 7

|   |   |   |
|---|---|---|
| 32 | 60 | 42 |
| 42 | 60 |   |

FIG. 7

## Fig. 10

```
┌──────────────────────────────┐ 90
│  ┌───────┐   ┌──────────┐     │
│  │  MEM  │   │  COMIN   │     │
│  └───────┘   └──────────┘     │
│  ┌───────┐   ┌──────────┐     │
│  │  PG   │   │ COMOUT   │     │
│  └───────┘   └──────────┘     │
│  ┌───────┐                    │
│  │ PROC  │                    │
│  └───────┘                    │
└──────────────────────────────┘
```

Fig. 10

Temporal display order of picture $T_i$

Encoding order

Picture reference for motion compensation

Frame reference for QP map coding

Golden frame

Alt-ref: Invisible frame at T=3

FIG. 8

EP 3 328 083 A1

FIG. 9

Europäisches
Patentamt

European
Patent Office

Office européen
des brevets

# EUROPEAN SEARCH REPORT

Application Number

EP 16 30 6542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUILLOTEL P ET AL: "Perceptual video coding based on MB classification and rate-distortion optimiza", SIGNAL PROCESSING. IMAGE COMMUNICATION, vol. 28, no. 8, 22 July 2012 (2012-07-22), pages 832-842, XP028698265, ISSN: 0923-5965, DOI: 10.1016/J.IMAGE.2012.07.003 * abstract * * Chapters 1-3 * | 1-16 | INV.<br>H04N19/176<br>H04N19/124<br>H04N19/154<br>H04N19/192 |
| A | EP 2 536 144 A1 (THOMSON LICENSING [FR]) 19 December 2012 (2012-12-19) * paragraphs [0037] - [0052] * | 1-16 | |
| A | US 8 126 283 B1 (GARBACEA ILIE [US] ET AL) 28 February 2012 (2012-02-28) * column 4, line 46 - column 7, line 25 * * column 13, line 61 - column 14, line 46 * | 1-16 | |
| A | US 2008/260042 A1 (SHAH DEVARSHI [US] ET AL) 23 October 2008 (2008-10-23) * the whole document * | 1-16 | **TECHNICAL FIELDS SEARCHED (IPC)**<br><br>H04N |
| A | HE Z ET AL: "Encoder-based rate smoothing and quality control for low-delay video coding and communication", VISUAL COMMUNICATIONS AND IMAGE PROCESSING; 21-1-2002 - 23-1-2002; SAN JOSE,, 21 January 2002 (2002-01-21), XP030080538, * the whole document * | 1-16 | |

The present search report has been drawn up for all claims

| Place of search | Date of completion of the search | Examiner |
|---|---|---|
| Munich | 19 May 2017 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                        

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 6542

This annex lists the patent family members relating to the patent documents cited in  the above-mentioned European search report.
The members are as contained in the European Patent Office EDP file on
The European Patent Office is in no way liable for these particulars which are merely given for the purpose of information.

19-05-2017

| Patent document cited in search report | | Publication date | Patent family member(s) | Publication date |
|---|---|---|---|---|
| EP 2536144 | A1 | 19-12-2012 | NONE | |
| US 8126283 | B1 | 28-02-2012 | NONE | |
| US 2008260042 | A1 | 23-10-2008 | CN 101658035 A | 24-02-2010 |
| | | | EP 2153657 A1 | 17-02-2010 |
| | | | JP 5113244 B2 | 09-01-2013 |
| | | | JP 2010525739 A | 22-07-2010 |
| | | | KR 20100005224 A | 14-01-2010 |
| | | | US 2008260042 A1 | 23-10-2008 |
| | | | US 2014177703 A1 | 26-06-2014 |
| | | | WO 2008133677 A1 | 06-11-2008 |

EPO FORM P0459

For more details about this annex : see Official Journal of the European Patent Office, No. 12/82